Europäisches Patentamt

European Patent Office

Office européen des brevets

(11) Veröffentlichungsnummer: **0 437 804 A1**

# (12) EUROPÄISCHE PATENTANMELDUNG

(21) Anmeldenummer: 90125128.0

(22) Anmeldetag: 21.12.90

(51) Int. Cl.5: **A01M 7/00**

(30) Priorität: 17.01.90 DE 4001194
17.01.90 DE 4001196

(43) Veröffentlichungstag der Anmeldung:
24.07.91 Patentblatt 91/30

(84) Benannte Vertragsstaaten:
**BE DE DK FR GB NL**

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Wiemeyer, Benno**
**Im Sande 6**
**W-4531 Lotte-Halen(DE)**
Erfinder: **Krabbe, Ulrich**
**Schulstrasse 5**
**W-4507 Hasbergen(DE)**

(54) **Landwirtschaftliche Feldspritze, die an einen Dreipunktkraftheber eines Schleppers anbaubar ist.**

(57) Landwirtschaftliche Feldspritze (1), die an den Dreipunktkraftheber (2) eines Schleppers (3) anbaubar ist, mit einem Rahmen (6), auf dessen Vorderseite Dreipunktkupplungselemente angeordnet sind, einem an dem Rahmen befestigten Flüssigkeitstank (10), einer von einer Kraftwelle angetriebene Flüssigkeitspumpe (18), in die sich im Flüssigkeitstank befindliche Flüssigkeitsmenge zu Ausbringelementen. Um auf einfachste Weise die Feldspritze auch für den Einsatz in hohen Feldfrüchten derart auszugestalten, daß die Feldfrüchte nicht beschädigt werden, ist vorgesehen, daß sich unterhalb des Flüssigkeitstanks (10) ein nach unten freier Raum (17) erstreckt, der sich seitlich bis zu den Unterlenkeranschlüssen (8) erstreckt, und daß der Raum (17) auch in Fahrtrichtung gesehen vollkommen frei ist.

EP 0 437 804 A1

## LANDWIRTSCHAFTLICHE FELDSPRITZE, DIE AN EINEN DREIPUNKTKRAFTHEBER EINES SCHLEPPERS ANBAUBAR IST

Die Erfindung betrifft eine landwirtschaftliche Feldspritze, die an den Dreipunktkraftheber eines Schleppers anbaubar ist, gemäß des Oberbegriffes des Patentanspruches 1.

Eine derartige Feldspritze ist durch die DE-OS 35 01 729 bekannt geworden.

Bei dieser Dreipunktanbaufeldspritze ist der Rahmen an seinen unteren Ende durch Ouertraversen verschlossen. Diese Quertraversen befinden sich in der Mitte zwischen der Radspur des die Feldspritze tragenden Schleppers unterhalb der Unterlenkeranschlüsse. Auf diesen Quertraversen ist in der Mitte unterhalb des Flüssigkeitstanks die Pumpe angeordnet. Durch die tiefe und geschlossene Anordnung des Rahmens der Anbaufeldspritze ergibt sich insbesondere im hoch aufgewachsenen Getreide der Nachteil, daß die unteren Teile in der Mitte der Feldspritze weit in den Bestand hinein ragen. Hierdurch beschäden diese Teile die Ähren, so daß Ertragseinbußen unvermeidlich sind. Dieses wird noch dadurch gefördert, daß der Schlepper an sich sehr tief baut und die Halme nach vorne drückt, so daß sie unmittelbar hinter dem Schlepper wieder nach hinten schnellen und mit voller Wucht gegen die tiefen Teile der Feldspritze im Bereich zwischen der Schlepperspur schlagen.

Der Erfindung liegt die Aufgabe zugrunde, auf einfachste Weise die Feldspritze auch für den Einsatz in hohen Feldfrüchten derart auszugestalten, daß die Feldfrüchte nicht beschädigt werden.

Diese Aufgabe wird erfindungsgemäß dadurch gelöst, daß sich unterhalb des Flüssigkeitstanks ein nach unten freier Raum erstreckt, der sich seitlich bis zu den Unterlenkeranschlüssen erstreckt, und daß der Raum auch in Fahrtrichtung gesehen vollkommen frei ist. Infolge dieser Maßnahmen werden die Getreidehalme und Ähren nicht durch Teilen der Feldspritze beschädigt. Hierzu ist dann in einer konstruktiven Ausgestaltung vorgesehen, daß die Rahmenteile, an denen die Unterlenkeranschlüsse sich befinden, etwa einen Abstand zueinander aufweisen, der der Radspur des die Feldspritze tragenden Schleppers entspricht, so daß die nach unten ragenden Rahmenteile sich in der Schlepperspur befinden. Hierdurch wird erreicht, daß die zwangsweise tief anzuordnenden Teile der Feldspritze sich in einem Bereich befinden, in dem sich keine Getreidehalme oder keine wieder zurückschnellenden Getreidehalme befinden. Hierdurch sind diese tief nach unten ragenden Rahmenteile in einem Bereich angeordnet, in dem sich üblicher Weise, vor allem bei der Anwendung des Fahrgassenverfahrens, keine Nutzpflanzen befinden. Hierbei muß sichergestellt sein, daß die sich in der Schlepperspur befindlichen und nach unten ragenden Rahmenteile unterhalb der Unterkante des Flüssigkeitstanks nicht durch eine Querstrebe oder andere Bauteile miteinander verbunden sind, so daß in jedem Falle der Freiraum unterhalb der Feldspritze zwischen den nach unten ragenden und sich in der Schlepperspur befindlichen Rahmenteile durchgehend frei ist. Desweiteren wird ermöglicht, daß die sich zwischen der Radspur befindlichen Teile der Feldspritze hoch angeordnet sein können, so daß sich der erfindungsgemäße Freiraum ergibt. Desweiteren wird zur Erreichung des erfindungsgemäßen Freiraumes in der Mitte unterhalb der Feldspritze vorgeschlagen, daß die sich in der Schlepperspur befindlichen und nach unten ragenden Rahmenteile unterhalb der Kante des Flüssigkeitstanks nicht durch eine Querstrebe oder andere Bauteile miteinander verbunden sind, so daß in jedem Falle der Freiraum unterhalb der Feldspritze zwischen den nach unten und sich in der Schlepperspur befindlichen Rahmenteilen durchgehend frei nach unten und hinten ist.

Desweiteren ist vorgesehen, daß die Pumpe der Draufsicht gesehen sich seitlich außen neben der durch die Unterlenkeranschlüsse und/oder die nach unten verlaufenden Rahmenteile gehende aufrechte Ebene befinden. Hierdurch wird eine vorteilhaft Anordnung der Pumpe an der Feldspritze erreicht. Hierdurch wird eine der Grundvorraussetzungen dafür geschaffen, daß ein Freiraum unterhalb des Flüssigkeitstanks in der Mitte der Feldspritze ausgebildet werden kann, da die Pumpe seitlich angeordnet ist. Darüberhinaus wird eine geschützte Anordnung der Pumpe erreicht.

Damit sichergestellt ist, daß die Pflanzen in gar keinem Falle beschädigt werden können, ist erfindungsgemäß vorgesehen, daß sämtliche Rahmenteile zumindest im mittleren Freiraumbereich so angeordnet und/oder geformt sind, daß sich keine Pflanzenteile verhaken etc. können, sondern abgewiesen werden.

Weitere Einzelheiten der Erfindung sind den übrigen Unteransprüchen, der Beispielsbeschreibung und den Zeichnungen zu entnehmen. Hierbei zeigen

Fig. 1    die erfindungsgemäß ausgebildete Feldspritze, an einem Ackerschlepper angebaut, während des Ausbringens von Flüssigkeiten in einen hochaufgewachsenen Bestand in Prinzipdarstellung und in der Seitenansicht,

Fig. 2    der Einsatz der erfindungsgemäßen Feldspritze in einem mit Fahrgassen versehenen Bestand in der Draufsicht,

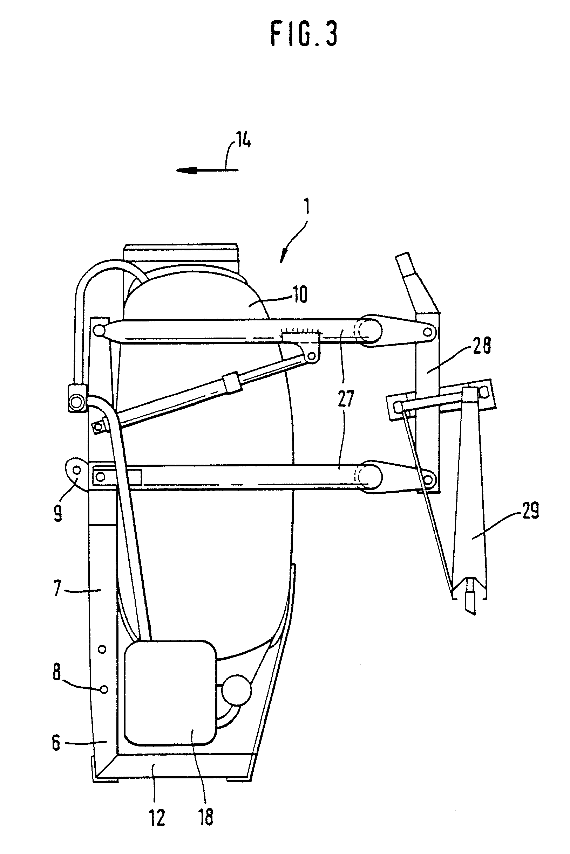

Fig. 3     die erfindungsgemäße Feldspritze in der Seitenansicht und

Fig. 4     die erfindungsgemäße Feldspritze in der Vorderansicht.

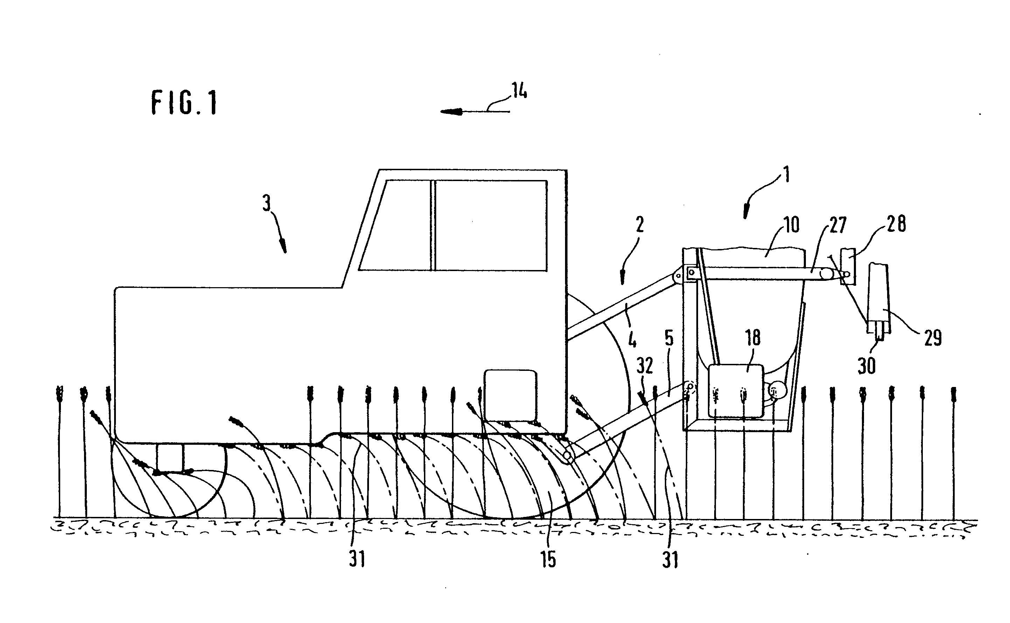

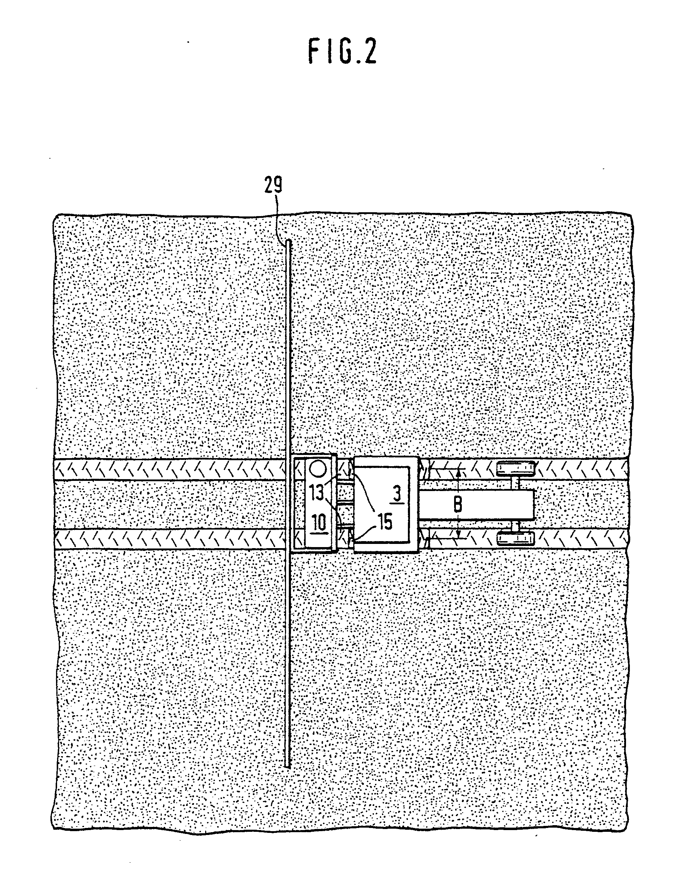

Die landwirtschaftliche Feldspritze 1 ist gemäß den Fig. 1 und 2 an den Dreipunktkraftheber 2 eines Ackerschleppers 3 angebaut. Der Dreipunktkraftheber 2 weist den Oberlenker 4 und die beiden Unterlenker 5 auf. Die Feldspritze 1 weist den Rahmen 6 auf, an dessen Vorderseite 7 die beiden Unterlenkeranschlußbolzen 8 und das obere Kupplungselement 9, an denen die Unterlenker 5 und der Oberlenker 4 zu befestigen sind, angeordnet sind. Die unteren Kuppelbolzen 8 und das obere Kupplungselement 9 bilden die Dreipunktkupplungselemente. Die unteren Kuppelbolzen 8 sind wahlweise in die durch gestrichtelte Linien angedeuteten Positionen 8' anzuordnen.

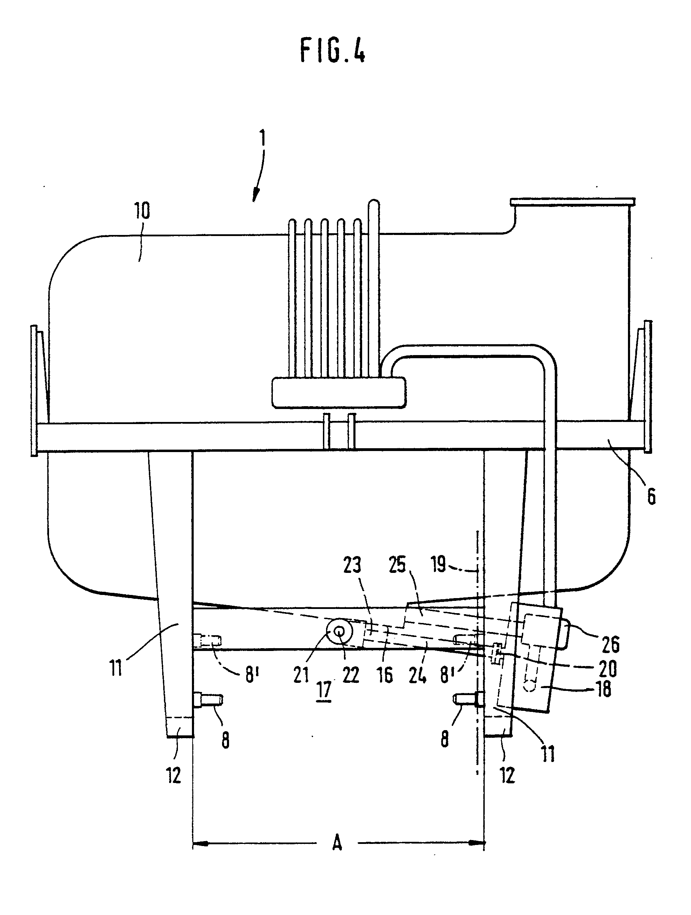

Die Feldspritze 1 weist den am Rahmen 6 angeordneten Flüssigkeitstank 10 auf. Die an dem Rahmen 6 befindlichen Rahmenteile 11 und 12 befinden sich in der Schlepperspur 13, also entgegen der Fahrtrichtung 14 gesehen, unmittelbar hinter den hinteren Laufrädern 15 des Ackerschleppers 1. Die sich in der Schlepperspur befindlichen und nach unten ragenden Rahmenteile 11 und 12 sind zumindest nicht wesentlich unterhalb der Unterkante 16 des Flüssigkeitstanks 10 durch keine Querstreben oder andere Bauteile verbunden, so daß in jedem Falle der erfindungsgemäße Freiraum 17 unterhalb der Feldspritze 1 zwischen den nach unten und sich in der Schlepperspur 13 befindlichen Rahmenteilen 11 und 12 durchgehend frei nach unten und hinten ist. Die Rahmenteile 11, an denen sich die Unterlenkeranschlüsse 8 befinden, weisen etwa einen Abstand A zueinander auf, der der Radspur B des die Feldspritze tragenden Schleppers 3 entspricht, so daß die nach unten ragenden Rahmenteile 11 und 12 der Feldspritze 1 sich in der Schlepperspur 13 befinden. Somit erstreckt sich unterhalb des Flüssigkeitstanks 1 ein nach unten freier Raum 17, der sich seitlich bis zu den Unterlenkeranschlüssen 8 erstreckt und dieser Raum 17 ist auch in Fahrtrichtung 14 gesehen, wie ein Blick auf die Fig. 4 zeigt, vollkommen frei.

Die Pumpe 18 ist aus der Mitte der Feldspritze seitlich versetzt auf dem Rahmenteil 12 angeordnet. Die Pumpe 18 befindet sich in der Draufsicht gesehen seitlich außen neben der durch die Unterlenkeranschlüsse 8 und in Fahrtrichtung verlaufenden und durch die strichpunktierten Linien angedeuteten aufrechten Ebene 19. Die Pumpe 18 ist derart angeordnet, daß ihre Antriebswelle 19 quer zur Fahrtrichtung 14 gerichtet ist. Unmittelbar direkt unter der Unterkante 16 des Flüssigkeitstanks 10 und etwa vor dem Flüssigkeitstank 10 ist das Winkelgetriebe 21 angeordnet, dessen Eingangswelle 22 nach vorne ragt. Die quer zur Fahrtrichtung ragende Welle 23 des Winkelgetriebes 21 ist über eine Zwischenwelle 24 mit der Antriebswelle 20 der Pumpe 18 verbunden. Die nach vorne ragende Welle 22 des Winkelgetriebes 21 ist über eine nicht dargestellte Gelenkwelle mit der Zapfwelle des Ackerschleppers kuppelbar. Das Winkelgetriebe 2 weist eine Übersetzung ins Schnelle auf, und zwar derart, daß bei reduzierter Eingangsdrehzahl die Solldrehzahl der Pumpe erreicht wird. Hierdurch ist es möglich, daß insbesondere sehr große Ackerschlepper mit verringerter Mototdrehzahl und Zapfwellendrehzahl fahren können, und dennoch die Solldrehzahl der Pumpe erreichen können.

Die Rahmenteile, zumindest im mittleren Freiraumbereich 17, sind so angeordnet und/oder so geformt, daß sich keine Pflanzenteile verhaken können, sondern weich abgewiesen werden.

Desweiteren sind die Anschlüsse 25 unterhalb des Flüssigkeitstanks dicht unterhalb des Flüssigkeitstanks 1 angeordnet sowie die größer bauenden Teile, wie beispielsweise der Filter 26, sind ebenfalls seitlich wie die Pumpe versetzt angeordnet und befinden sich, in der Draufsicht gesehen, seitlich neben einer durch die Unterlenkeranschlüsse 8 gehenden senkrechten und in Fahrtrichtung verlaufenden Ebene 19.

Desweiteren ist an dem vorderen Rahmenteil 7 über das Parallelogrammgestänge 27 und dem Zwischenrahmen 28 das Verteilergestänge 29 hinter der Feldspritze angeordnet. Das Verteilergestänge 29 weist die Ausbringdüsen 30 auf. Durch den erfindungsgemäßen Freiraum 17 wird erreicht, wie Fig. 1 zeigt, daß die von den Ackerschlepper 3 in der Radspur nach vorne gedrückten Getreidehalme 31, wenn sie hinter dem Ackerschlepper 3 wieder nach hinten schnellen nicht gegen Teile der Feldspritze 1 schlagen können. Somit werden die Ähren 32 der Getreidehalme 31 nicht beschädigt.

**Patentansprüche**

1.     Landwirtschaftliche Feldspritze, die an den Dreipunktkraftheber eines Schleppers anbaubar ist, mit einem Rahmen, auf dessen Vorderseite Dreipunktkupplungselemente angeordnet sind, einem an dem Rahmen befestigten Flüssigkeitstank, einer von einer Kraftwelle angetriebene Flüssigkeitspumpe, in die sich im Flüssigkeitstank befindliche Flüssigkeitsmenge zu Ausbringelementen, dadurch gekennzeichnet, daß sich unterhalb des Flüssigkeitstanks (10) ein nach unten freier Raum (17) erstreckt, der sich seitlich bis zu den Unterlenkeranschlüssen (8) erstreckt, und daß der Raum (17) auch in Fahrtrichtung (14) gesehen vollkommen frei ist.

2. Felspritze nach Anspruch 1, dadurch gekennzeichnet, daß die Rahmenteile (11), an denen die Unterlenkeranschlüsse (8) sich befinden, etwa einen Abstand (A) zueinander aufweisen, der der Radspur (B) des die Feldspritze (1) tragenden Schleppers (3) entspricht, so daß die nach unten ragenden Rahmenteile (11) sich in der Schlepperspur (13) befinden.

3. Feldspritze nach einem oder mehreren der vorstehenden Ansprüche, dadurch gekennzeichnet, daß die sich in der Schlepperspur (13) befindlichen und nach unten ragenden Rahmenteile (11) und sich nicht wesentlich unterhalb der Unterkante (16) des Flüssigkeitstanks (10) nicht durch eine Querstrebe oder andere Bauteile miteinander verbunden sind, so daß in jedem Falle der Freiraum (17) unterhalb der Feldspritze (1) zwischen den nach unten und sich in der Schlepperspur (13) befindlichen Rahmenteilen (11) durchgehend frei nach unten und hinten ist.

4. Feldspritze nach einem oder mehreren der vorstehenden Ansprüche, dadurch gekennzeichnet, daß die Pumpe (18) sich in der Draufsicht gesehen seitlich außen neben der durch die Unterlenkeranschlüsse (8) und/oder die nach unten verlaufenden Rahmenteilen (11) gehenden aufrechten Ebene (19) befindet.

5. Feldspritze nach einem oder mehreren der vorstehenden Ansprüche, dadurch gekennzeichnet, daß die Anschlüsse (24) unterhalb des Flüssigkeitstanks (10) sich dicht unterhalb des Flüssigkeitstanks (10) befinden, sowie die größer bauenden Teile, wie beispielsweise Filter (26), Umstellhähne etc. ebenfalls seitlich versetzt angeordnet sind und sich in der Draufsicht gesehen seitlich neben einer durch die Unterlenkeranschlüsse (8) oder die nach unten gehenden und sich in der Schlepperspur (13) befindlichen Rahmenteile (11) gehenden aufrechten Ebene (19) befinden.

6. Feldspritze nach einem oder mehreren der vorstehenden Ansprüche, dadurch gekennzeichnet, daß sämtlich Rahmenunterteile zumindest im mittleren Freiraumbereich (17) so angeordnet und/oder geformt sind, daß sich keine Pflanzenteile verhaken etc. können, sondern abgewiesen werden.

7. Feldspritze nach einem oder mehreren der vorstehenden Ansprüche, dadurch gekennzeichnet, daß die Pumpe (18) von einem Ölmotor angetrieben wird.

8. Feldspritze nach einem oder mehreren der vorstehenden Ansprüche, dadurch gekennzeichnet, daß die Pumpe (18) derart angeordnet ist, daß ihre Antriebswelle (20) quer zur Fahrtrichtung (14) gerichtet ist, daß unmittelbar direkt unter der Unterkante (16) des Flüssigkeitstanks (10) oder vor dem Flüssigkeitstank (10) ein Winkelgetriebe (21) angeordnet ist, wobei die quer zur Fahrtrichtung (14) ragende Welle (23) des Winkelgetriebes (21) über eine Zwischenwelle (24) mit der Antriebswelle (20) der Pumpe (18) verbunden ist und die nach vorne ragende Welle (22) des Winkelgetriebes (21) über eine Gelenkwelle mit der Zapfwelle des Ackerschleppers kuppelbar ist.

9. Feldspritze nach einem oder mehreren der vorstehenden Ansprüche, dadurch gekennzeichnet, daß das Winkelgetriebe (21) eine Übersetzung ins Schnelle aufweist, und zwar derart, daß bei reduzierter Eingangsdrehzahl die Solldrehzahl der Pumpe erreicht wird.

FIG.1

# FIG.2

# FIG.3

# FIG.4

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-7 529 91   (L. HENRY)<br>* Page 1, lignes 1-52; figure 2 * | 1-4,6,7 | A 01<br>M 7/00 |
| A | | 5 | |
| Y | GB-A-8 517 14   (ALLMAN PATENTS LTD)<br>* Page 1, ligne 69 - page 2, ligne 54; figure 2 * | 1-4,6,7 | |
| A | | 5 | |
| D,A | DE-A-3 501 729   (NATIONALE COOPERATIEVE AAN- EN VERKOOPVERENIGING VOOR LAND- EN TUINBOUW G.A. "CEBECO-HANDELSRAAD") | | |

| | |
|---|---|
| | RECHERCHIERTE SACHGEBIETE (Int. Cl.5) |
| | A 01 M |

Der vorliegende Recherchenbericht wurde für alle Patentansprüche erstellt

| Recherchenort | Abschlußdatum der Recherche | Prüfer |
|---|---|---|
| Den Haag | 06 März 91 | VISTISEN L.M. |